# FASCICULE DE BREVET EUROPEEN

(11) **EP 4 166 412 B1**
(45) Date de publication et mention de la délivrance du brevet: **31.07.2024**
(21) Numéro de dépôt: 22200653.8
(22) Date de dépôt: 10.10.2022
(51) Int. Cl.: B61D 27/00, B60H 3/06, B01D 46/90, B60H 1/00, B01D 46/12, B01D 46/44

(54) **DISPOSITIF DE VENTILATION POUR VÉHICULE DE TRANSPORT, VÉHICULE DE TRANSPORT ET PROCÉDÉ DE MAINTENANCE ASSOCIÉS**
BELÜFTUNGSVORRICHTUNG FÜR EIN TRANSPORTFAHRZEUG, TRANSPORTFAHRZEUG UND WARTUNGSVERFAHREN DAFÜR
VENTILATION DEVICE FOR TRANSPORT VEHICLE, ASSOCIATED TRANSPORT VEHICLE AND MAINTENANCE METHOD

(30) Priorité: 12.10.2021 FR 2110785
(43) Date de publication de la demande: 19.04.2023
(73) Titulaire: SpeedInnov, 75008 Paris (FR)
(72) Inventeur: COUTY, Matthieu, 17440 AYTRE (FR); BRUNAULT, Clément, 17220 SAINTE SOULLE (FR); GUERIN, Olivier, 17230 SAINT-OUEN D'AUNIS (FR)
(74) Mandataire: Lavoix

(56) Documents cités:
- EP-A1- 3 656 634
- CN-A- 107 913 551
- KR-A- 20010 057 989
- KR-A- 20040 042 111

## Description

La présente invention concerne un dispositif de ventilation pour véhicule de transport, notamment pour véhicule ferroviaire, comportant :
- un dispositif de génération d'un flux d'air ;
- au moins un conduit de circulation d'air destiné à recevoir le flux d'air, le conduit s'étendant selon une direction d'extension entre une entrée d'air et une sortie d'air ; et
- un filtre à air en position de filtration dans laquelle ledit filtre est disposé entre l'entrée d'air et la sortie d'air dans le conduit de circulation d'air.

L'invention se situe dans le domaine de la ventilation, du chauffage et de la climatisation d'espaces confinés. Elle trouve une application particulière dans le domaine des véhicules de transport, notamment dans les véhicules de transport public.

En effet, il est nécessaire d'équiper les véhicules de transport, en particulier de transport ferroviaire, de systèmes de ventilation, éventuellement combinée au chauffage et/ou à la climatisation, pour assurer le confort des passagers, ainsi que le renouvellement de l'air au sein des compartiments comportant des équipements techniques.

Pour qu'un tel système de ventilation et de recyclage de l'air fonctionne, il est prévu d'assurer un flux d'écoulement de l'air. Afin d'éliminer du flux d'air les poussières et/ou d'autres sources de pollution, il est connu de mettre en place un filtre sur la trajectoire dudit flux.

Le filtre à air est alors obstrué progressivement par l'accumulation de particules telles que la poussière, la saleté, l'herbe, le pollen, etc., ce qui augmente au cours du temps sa résistance au passage de l'air. Il est donc nécessaire de changer et/ou de nettoyer régulièrement les filtres.

Généralement, les filtres à air sont remplacés périodiquement en fonction des indications du fabricant. Le remplacement est souvent effectué sans évaluer la capacité de rétention résiduelle réelle du filtre, ni son taux effectif d'encrassement, qui varie en fonction des conditions d'utilisation, notamment de la saison. De plus, l'inspection et le changement des filtres à air pour un véhicule de transport nécessite habituellement l'arrêt du véhicule dans un dépôt. Un remplacement du filtre est donc coûteux et prend du temps.

KR 2004 0042111 A décrit un dispositif de ventilation pour véhicule comportant un dispositif de génération d'un flux d'air et au moins un conduit de circulation d'air destiné à recevoir le flux d'air. Le dispositif de ventilation comprend en outre deux filtres, déplaçables au moyen d'un mécanisme de remplacement de filtres.

Un des objectifs de l'invention est de proposer un dispositif de ventilation peu encombrant et qui nécessite des opérations de maintenance, et notamment de remplacement du filtre à air, moins fréquentes, tout en préservant la pression et le débit d'écoulement du flux.

A cet effet, l'invention a pour objet un dispositif de ventilation selon la revendication 1.

La présence de plusieurs filtres au sein du dispositif de ventilation et leur remplacement automatique permettent de réduire la fréquence des opérations de maintenance, tout en garantissant une bonne filtration de l'air passant par ledit dispositif.

Selon des modes de réalisation particuliers de l'invention, le dispositif de ventilation présente en outre l'une ou plusieurs des caractéristiques des revendications 2 à 4.

L'invention se rapporte en outre à un véhicule de transport selon la revendication 5.

L'invention porte également sur un procédé de maintenance selon la revendication 6.

L'invention sera mieux comprise à la lecture de la description qui va suivre, donnée uniquement à titre d'exemple non limitatif et faite en se référant aux dessins sur lesquels :
- la figure 1 est une vue schématique, en coupe, d'un dispositif de ventilation selon l'invention, comprenant un filtre supérieur, un filtre intermédiaire et un filtre inférieur, le filtre supérieur étant en position de filtration ;
- la figure 2 est une vue schématique, en coupe, du dispositif de ventilation de la figure 1, le filtre intermédiaire étant en position de filtration ; et
- la figure 3 est un graphique représentant des pertes de charge dans le dispositif de ventilation représentée sur la figure 1, à différentes phases d'un procédé selon l'invention.

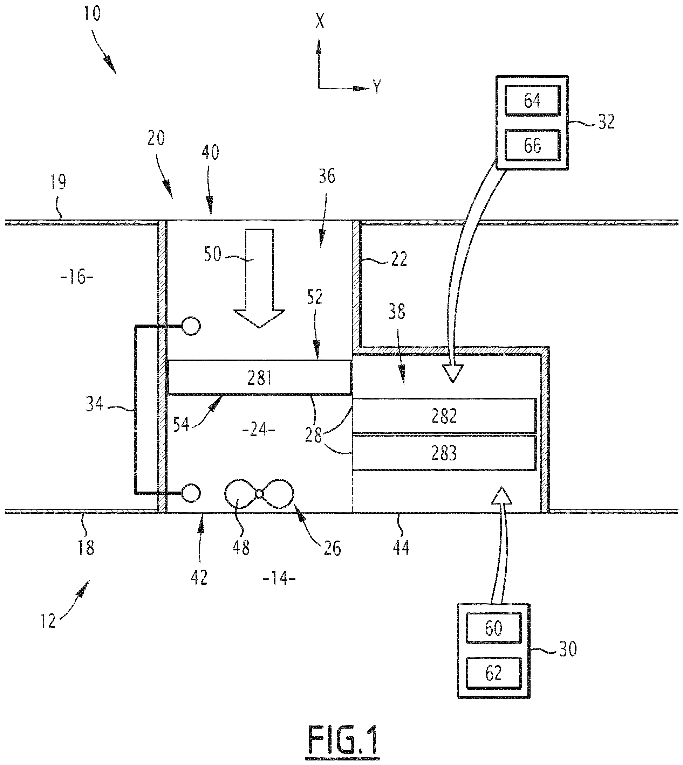

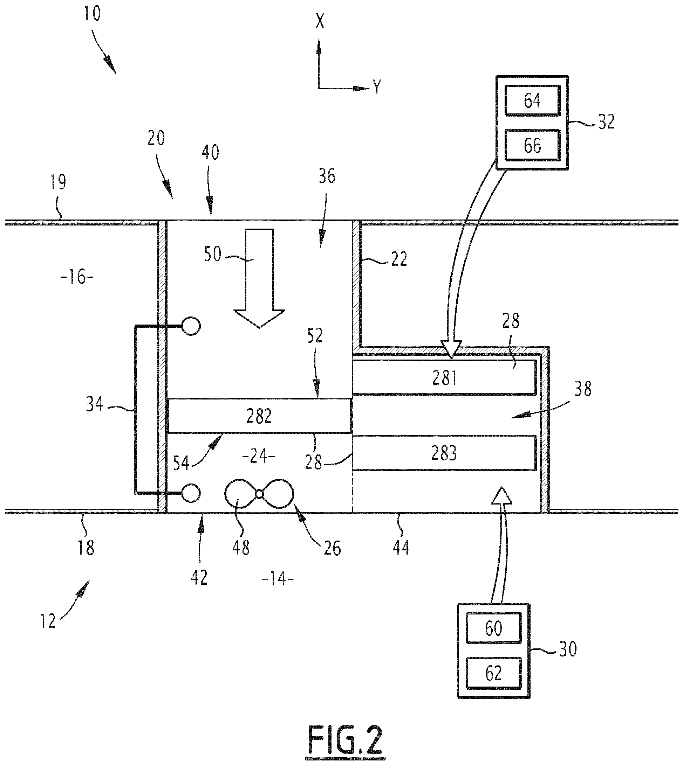

Les figures 1 et 2 illustrent schématiquement un véhicule de transport 10 selon l'invention. Le véhicule 10 est par exemple un véhicule ferroviaire, notamment de type train, métro ou tramway. En variante, le véhicule 10 est un véhicule routier, par exemple un bus ou un car.

Le véhicule 10 comporte un compartiment 12 délimitant un espace intérieur 14 apte à recevoir des passagers, des marchandises et/ou des équipements techniques. L'espace intérieur 14 est séparé de l'extérieur du compartiment 12 par une paroi 16 présentant une face interne 18, orientée vers l'espace intérieur 14, et une face externe 19, orientée vers l'extérieur du compartiment 12.

Par exemple, la paroi 16 sépare l'espace intérieur 14 de l'extérieur du véhicule 10. La face externe 19 est alors orientée vers l'extérieur du véhicule 10. Ladite paroi 16 est par exemple le toit du véhicule 10.

Le véhicule 10 comporte en outre au moins un dispositif de ventilation 20 de l'espace intérieur 14. Le dispositif de ventilation 20 est notamment apte à insuffler dans ledit espace intérieur 14 de l'air provenant de l'extérieur du compartiment 12, par exemple de l'extérieur du véhicule 10.

A cet effet, le dispositif de ventilation 20 comporte une enceinte 22 définissant un volume intérieur 24.

Le dispositif de ventilation 20 comporte en outre un dispositif 26 de génération d'un flux d'air, une pluralité de filtres 28 à air et un dispositif 30 de changement des filtres à air. Dans le mode de réalisation des figures 1 et 2, le dispositif 26 de génération d'un flux d'air, les filtres 28 à air et le dispositif 30 de changement des filtres à air sont disposés dans le volume intérieur 24 de l'enceinte 22.

Le dispositif de ventilation 20 comprend en outre un dispositif électronique de maintenance 32 et de préférence un dispositif de mesure 34, qui seront décrits ultérieurement.

L'enceinte 22 est configurée pour être installée sur ou à bord du véhicule 10. Dans le mode de réalisation des figures 1 et 2, l'enceinte 22 est disposée dans une ouverture ménagée dans la paroi 16 du véhicule 10.

L'enceinte 22 définit un conduit 36 de circulation d'air destiné à recevoir le flux d'air émis par le dispositif 26 de génération d'un flux d'air. L'enceinte 22 définit également un compartiment de stockage 38 distinct du conduit 36 de circulation d'air. On entend par « distinct » que le conduit 36 de circulation et le compartiment de stockage 38 définissent des volumes internes disjoints.

De préférence, l'enceinte 22 présente une paroi interne (représentée schématiquement par des pointillés sur les figures 1 et 2), disposée entre le conduit 36 de circulation et le compartiment de stockage 38 et présentant de préférence des ouvertures à travers lesquelles les filtres 28 peuvent passer. Ladite paroi interne forme une cloison étanche entre le conduit 36 de circulation et le compartiment de stockage 38, l'étanchéité étant notamment assurée par la présence des filtres 28 qui obstruent les ouvertures.

Le conduit 36 de circulation s'étend selon une direction d'extension X entre une entrée 40 d'air et une sortie 42 d'air, lesdites entrée 40 et sortie 42 débouchant sur des ouvertures ménagées dans l'enceinte 22. Dans l'exemple des figures 1 et 2, l'entrée 40 et la sortie 42 d'air débouchent respectivement sur l'extérieur du compartiment 12 et sur l'espace intérieur 14 du compartiment 12, au niveau respectivement de la face externe 19 et de la face interne 18 de ladite paroi 16.

L'entrée 40 et/ou la sortie 42 d'air est(sont) éventuellement équipée(s) d'une grille ou de persiennes.

Le compartiment de stockage 38 est configuré pour recevoir plusieurs filtres 28 à air. De préférence, le compartiment de stockage 38 est configuré pour recevoir l'ensemble des filtres 28 à air du dispositif de ventilation 20.

De préférence, le compartiment de stockage 38 est équipé au niveau de la face interne 18 de la paroi 16 d'une trappe 44 obturant une ouverture ménagée dans ladite face 18. Ladite trappe 44 permet d'accéder depuis le compartiment 12 aux filtres 28 présents dans le compartiment de stockage 38, par exemple pour les remplacer par des filtres neufs.

De préférence, la paroi interne sépare le conduit 36 de circulation et le compartiment de stockage 38 de manière étanche à l'air l'un par rapport à l'autre. On entend par cela que seule une partie minime du flux d'air circulant entre l'entrée 40 et la sortie 42 est susceptible de passer dans le compartiment de stockage 38. De préférence, moins de 1% du flux d'air circulant entre l'entrée 40 et la sortie 42 est susceptible de passer dans le compartiment de stockage 38. Avantageusement, le conduit 36 de circulation et le compartiment de stockage 38 sont entièrement étanches à l'air l'un par rapport à l'autre, l'intégralité du flux d'air circulant entre l'entrée 40 et la sortie 42 passant exclusivement dans le conduit 36.

La paroi interne présente des ouvertures de passage des filtres 28 permettant le déplacement des filtres 28, comme cela sera expliqué par la suite.

Le dispositif 26 de génération d'un flux d'air est configuré pour entrainer la circulation de l'air entre l'entrée 40 et la sortie 42 du conduit 36.

Dans l'exemple représenté sur les figures 1 et 2, le dispositif 26 de génération comprend un ventilateur 48 permettant l'extraction d'air selon un écoulement de flux, dont la direction principale est indiquée par la flèche 50 sur les figures 1 et 2.

Selon le mode de réalisation représenté sur les figures 1 et 2, le ventilateur 48 est disposé dans le conduit 36, par exemple à proximité de la sortie 42. Le ventilateur 48 comporte notamment un moteur électrique (non représenté) et est apte à générer un flux d'air entre l'entrée 40 et la sortie 42 du conduit 36.

Le dispositif de ventilation 20 comprend une pluralité de filtres à air 28 disposés à l'intérieur de l'enceinte 22. De préférence, le dispositif de ventilation 20 comprend entre deux et dix filtres 28. Par exemple, comme représenté sur les figures 1 et 2, le dispositif de ventilation 20 comprend trois filtres 28.

Chaque filtre 28 est perméable à l'air et est apte à retenir les particules solides, notamment de type poussières ou pollen.

Chaque filtre 28 présente une face amont 52 et une face aval 54, destinées à être orientées respectivement vers l'entrée 40 et vers la sortie 42 du circuit 36.

Chaque filtre 28 est monté mobile dans l'enceinte 22 entre une pluralité de positions, dont une position de filtration et une position de stockage.

En position de filtration, le filtre 28 est disposé entre l'entrée 40 d'air et la sortie 42 d'air dans le conduit 36 de circulation d'air. La face amont 52 du filtre 28 est alors orientée vers l'entrée d'air 40 et la face aval 54 est orientée vers la sortie d'air 42. De préférence, le filtre 28 obture alors complètement une section dudit conduit 36. De la sorte, le flux d'air arrivant par l'entrée 40 est forcé de passer à travers le filtre 28 en position de filtration pour sortir de l'enceinte 22.

Le passage du flux d'air à travers ledit filtre 28 crée une perte de charge ΔP, c'est-à-dire une différence de pression entre le côté amont et le côté aval du filtre 28, c'est-à-dire entre l'entrée 40 et la sortie 42 d'air. Dans le mode de réalisation représenté sur les figures 1 et 2, la perte de charge ΔP est positive : cela signifie que la pression en amont du filtre 28 est supérieure à la pression en aval du filtre 28.

Initialement, le filtre 28 présente un taux d'encrassement minimal, de préférence nul. La perte de charge ΔP est alors minimale, de préférence inférieure à 40 Pa.

Au fur et à mesure de son utilisation, le filtre 28 est obstrué progressivement par l'accumulation de particules telles que la poussière, la saleté, l'herbe, le pollen, etc. Le taux d'encrassement du filtre 28 augmente, tout comme la perte de charge ΔP, jusqu'à un taux d'encrassement maximal, qui sera défini ultérieurement.

En position de stockage, le filtre 28 est disposé dans le compartiment de stockage 38, hors du conduit 36 de circulation.

De préférence, en cours d'utilisation normale, un seul filtre 28 à la fois se trouve en position de filtration. On entend par « en cours d'utilisation normale » les périodes de fonctionnement du dispositif de ventilation 20, hors les périodes de remplacement des filtres ou de maintenance.

Dans l'exemple des figures 1 et 2, le dispositif de ventilation 20 comprend un filtre supérieur 281, un filtre intermédiaire 282 et un filtre inférieur 283, le filtre intermédiaire 282 étant disposé entre le filtre supérieur 281 et le filtre inférieur 283 selon la direction d'extension X.

Dans l'exemple de la figure 1, le filtre supérieur 281 est en position de filtration et le filtre intermédiaire 282 et le filtre inférieur 283 sont en position de stockage.

Dans l'exemple de la figure 2, le filtre intermédiaire 282 est en position de filtration et le filtre supérieur 281 et le filtre inférieur 283 sont en position de stockage.

Le dispositif 30 de changement des filtres à air est configuré pour déplacer chaque filtre 28 entre la position de filtration et la position de stockage dudit filtre 28.

Le dispositif 30 de changement comprend un dispositif d'entrainement 60 et un dispositif électronique de commande 62 configuré pour commander le dispositif d'entrainement 60.

Le dispositif d'entrainement 60 est configuré pour déplacer chaque filtre 28 entre la position de filtration et la position de stockage selon une direction Y sensiblement perpendiculaire à la direction d'extension X. De préférence, les filtres 28 passent de la position de filtration à la position de stockage (et inversement), en passant par les ouvertures de passage ménagées dans la paroi interne séparant le conduit de circulation 36 et le compartiment de stockage 38.

Par exemple, le dispositif d'entrainement 60 est un système d'entrainement par crémaillère ou par vérin.

Le dispositif électronique de commande 62 est configuré pour recevoir une consigne de remplacement d'un filtre 28 à air et pour transmettre une commande au dispositif d'entrainement 60 de manière à remplacer ledit filtre 28 à air par un filtre 28 présent dans le compartiment de stockage 38 et n'ayant pas encore été en position de filtration.

Le dispositif électronique 32 de maintenance est configuré pour contrôler le taux d'encrassement du filtre à air 28 en position de filtration et pour commander son remplacement.

Le dispositif électronique 32 de maintenance est en outre configuré pour alerter de la nécessité de procéder au remplacement de l'ensemble des filtres 28 de l'enceinte 22.

Le dispositif électronique 32 est représenté schématiquement sur la figure 1. Le dispositif électronique 32 est intégré par exemple au système de management du véhicule 10 (aussi désigné par l'acronyme TCMS pour « Train Control and Management System »).

Le dispositif électronique 32 comprend un module de réception 64 configuré pour recevoir un signal d'alerte caractéristique du taux d'encrassement du filtre 28 en position de filtration et un module de commande 66 configuré pour transmettre en fonction du signal d'alerte au moins une consigne à un dispositif autre que le dispositif électronique 32.

De préférence, le module de réception 64 est configuré pour recevoir un premier signal caractéristique du taux d'encrassement du filtre 28 en position de filtration. Avantageusement, le module de réception 64 est configuré pour recevoir le premier signal à intervalles de temps réguliers, par exemple à des intervalles de temps compris entre 1 jour et 7 jours.

Le module de commande 66 est configuré pour envoyer une consigne de remplacement du filtre 28 au dispositif 30 de changement des filtres à air, notamment au dispositif électronique de commande 62, lorsque le taux d'encrassement dudit filtre 28 dépasse un premier seuil d'encrassement.

De préférence, le module de commande 66 est en outre configuré pour envoyer une consigne de maintenance à un récepteur extérieur au dispositif de ventilation 20 lorsque :
- chaque filtre 28 en position de stockage présente un taux d'encrassement supérieur ou égal au premier seuil d'encrassement ; et
- le filtre 28 en position de filtration présente un taux d'encrassement supérieur ou égal à un deuxième seuil d'encrassement, le deuxième seuil d'encrassement étant plus faible que le premier seuil d'encrassement.

Ainsi, le module de commande 66 est configuré pour envoyer la consigne de maintenance lorsque tous les filtres 28 présents dans le compartiment de stockage 38 ont déjà été utilisés, c'est-à-dire qu'il n'y a plus de filtres 28 neufs dans le compartiment de stockage 38, et que le taux d'encrassement du filtre 28 en position de filtration dépasse le deuxième seuil d'encrassement. La consigne de maintenance permet d'avertir un opérateur qu'il est nécessaire de remplacer les filtres 28 de l'enceinte par des filtres neufs.

De préférence, le dispositif de ventilation 20 comporte un dispositif de mesure 34 de mesure de pression, comme représenté sur les figures 1 et 2.

Le dispositif de mesure 34 est de préférence relié électroniquement au dispositif électronique 32 de maintenance, par exemple au moyen d'une liaison de données sans fil.

Le dispositif de mesure 34 est disposé au moins en partie dans le conduit de circulation 36.

Lorsqu'un filtre 28 est en position de filtration, le dispositif de mesure 34 est apte à mesurer une différence de pression entre l'air du côté aval dudit filtre 28 et l'air du côté amont dudit filtre 28. En d'autres termes, le dispositif de mesure 34 est apte à mesurer la perte de charge ΔP du flux d'air entre les faces 52, 54 du filtre 28 en position de filtration, ladite perte de charge ΔP correspondant au taux d'encrassement du filtre 28.

Le dispositif de mesure 34 est de préférence configuré pour mesurer la perte de charge ΔP à intervalles de temps réguliers, par exemple à des intervalles de temps compris entre 1 jour et 7 jours.

En complément ou en variante, le taux d'encrassement du filtre est mesuré par des moyens optiques, en évaluant une opacité du filtre.

Le dispositif de mesure 34 est également configuré pour transmettre le premier signal caractéristique du taux d'encrassement du filtre 28 au module de réception 64.

Le fonctionnement du dispositif de ventilation 20 va à présent être décrit pour illustrer un procédé de maintenance selon l'invention.

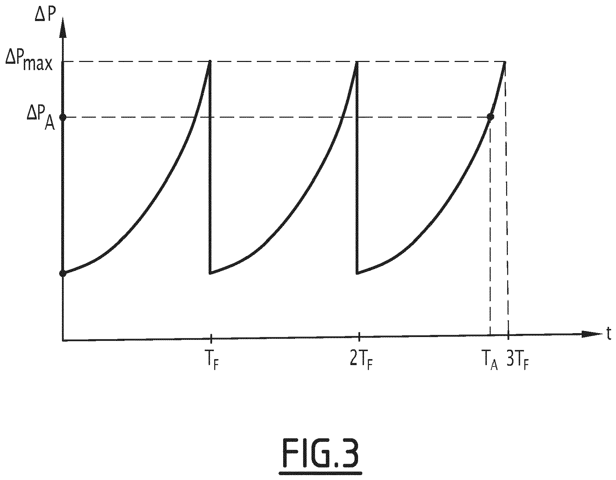

Sur la figure 3 est représenté un diagramme schématique avec, en abscisse, le temps, et, en ordonnée, la perte de charge mesurée par le dispositif de mesure 34.

Initialement, un premier filtre 28 à air est mis en position de filtration dans le conduit de circulation 36. Le ou les autres filtres 28 se trouvent alors en position de stockage dans le compartiment de stockage 38.

Dans l'exemple de la figure 1, le premier filtre 28 est le filtre supérieur 281.Le filtre intermédiaire 282 et le filtre inférieur 283 se trouvent en position de stockage.

Puis, le dispositif 26 de génération d'un flux d'air est mis en marche et entraine alors la circulation de l'air entre l'entrée 40 et la sortie 42 du conduit 36. Dans l'exemple de la figure 1, le ventilateur 48 réalise l'extraction d'air selon l'écoulement de flux 50.

Le flux d'air entre ainsi par l'entrée d'air 40, passe à travers le premier filtre 28, c'est-à-dire à travers le filtre supérieur 281 dans l'exemple de la figure 1, puis ressort par la sortie 42.

Au début de son utilisation, le taux d'encrassement dudit premier filtre 28 est minimal, voire nul. La perte de charge ΔP au niveau du premier filtre 28 est alors également minimale.

Au fur et à mesure de son utilisation, le premier filtre 28 est obstrué progressivement par l'accumulation de particules telles que la poussière, la saleté, l'herbe, le pollen, etc., entrainé par l'air. Le taux d'encrassement du premier filtre 28 augmente, jusqu'à atteindre un premier seuil d'encrassement au bout d'un laps de temps désigné par T_{F}.

Dans l'exemple de la figure 3, le premier seuil d'encrassement correspond à un taux d'encrassement maximal, plus particulièrement à une perte de charge maximale ΔPₘₐₓ. Le laps de temps T_{F} correspond alors à la durée de vie du premier filtre 28.

Lorsque le taux d'encrassement du premier filtre 28 atteint et dépasse le premier seuil d'encrassement, le premier filtre 28 est remplacé par un deuxième filtre 28 qui était jusqu'alors en position de stockage au moyen du dispositif de changement de filtres 30. Dans l'exemple des figures 1 et 2, le filtre supérieur 281 est remplacé par le filtre intermédiaire 282.

Le dispositif électronique 32 de maintenance, et plus précisément le module de commande 66, envoie une consigne de remplacement du premier filtre 281 au dispositif 30 de changement des filtres à air, notamment au dispositif électronique de commande 62.

Lors d'une première sous-étape, le deuxième filtre 28, c'est-à-dire le filtre intermédiaire 282 dans l'exemple des figures, passe en position de filtration. Puis, lors d'une deuxième sous-étape, le premier filtre 28, c'est-à-dire à travers le filtre supérieur 281 dans l'exemple des figures, passe en position de stockage. De la sorte, il n'est pas nécessaire d'interrompre le dispositif 26 de génération, au moins un filtre 28 se trouvant toujours dans le conduit de circulation 36.

Le dispositif de ventilation 20 se trouve alors dans la configuration de l'exemple de la figure 2. Le taux d'encrassement du deuxième filtre 28 est alors minimal.

Dans l'exemple des figures, lorsque le taux d'encrassement du filtre intermédiaire 282 dépasse à son tour le premier seuil d'encrassement, c'est-à-dire lorsque la perte de charge mesurée par le dispositif de mesure 34 atteint et dépasse à nouveau ΔPₘₐₓ, le filtre intermédiaire 282 est remplacé par un troisième filtre 28, plus précisément par le filtre inférieur 283, au moyen du dispositif 30 de changement de filtres. Dans l'exemple de la figure 3, le filtre intermédiaire 282 présente une même durée de vie T_{F}que le filtre supérieur 281.

Ce procédé est répété jusqu'au dernier filtre 28 (il s'agit du filtre inférieur 283 dans l'exemple représenté sur les figures).

Lorsque tous les filtres 28 présentent un taux d'encrassement supérieur au premier seuil, le dispositif 26 de génération est éteint. Un opérateur retire alors les filtres 28 usagés de l'enceinte 22 et les remplace par des filtres neufs. L'opérateur accède par exemple aux filtres 28 en retirant la trappe 44. Il n'est ainsi pas nécessaire de déposer le dispositif de ventilation 20.

Comme représenté sur la figure 3, l'opérateur est averti en amont de l'imminence de cette opération de maintenance.

Le taux d'encrassement du dernier filtre 28 augmente au fur et à mesure de l'utilisation dudit filtre 28, jusqu'à atteindre un deuxième seuil d'encrassement au bout d'un laps de temps, aussi appelé temps d'alerte T_{A}.

Le deuxième seuil d'encrassement est inférieur au premier seuil. Dans l'exemple de la figure 3, le deuxième seuil correspond à une perte de charge d'alerte ΔP_{A} strictement inférieure à la perte de charge maximale ΔPₘₐₓ. De préférence, la perte de charge d'alerte ΔP_{A} est comprise entre 80% et 95% de la perte de charge maximale ΔPₘₐₓ.

Lorsque le taux d'encrassement du dernier filtre 28 dépasse le deuxième seuil, une consigne de maintenance est émise en direction d'un récepteur extérieur au dispositif de ventilation 20. Un opérateur est ainsi averti que le dernier filtre 28 va prochainement présenter un taux d'encrassement critique et qu'il est nécessaire de remplacer les filtres 28 de l'enceinte 22 par des filtres neufs. L'opérateur peut ainsi programmer le remplacement des filtres 28.

Grâce aux caractéristiques décrites ci-dessus, le dispositif de ventilation 20 selon l'invention nécessite des opérations de maintenance moins fréquentes, tout en préservant la pression et le débit d'écoulement du flux.

La présence de plusieurs filtres au sein du dispositif de ventilation et leur remplacement automatique permettent de réduire la fréquence des opérations de maintenance nécessitant l'intervention d'un opérateur. Le nombre de filtres 28 dans l'enceinte 22 peut être adapté en fonction du pas de maintenance désiré.

Le dispositif de ventilation 20 demeure toutefois peu encombrant et peut ainsi être installé en toiture ou dans un local technique.

Par ailleurs, la mesure de la perte de charge au niveau des filtres 28 permet une estimation précise de leur taux d'encrassement et permet d'optimiser leur durée de vie en évitant un remplacement trop précoce.

L'émission d'une consigne de maintenance permet d'anticiper le remplacement de l'ensemble des filtres 28. Les inspections périodiques deviennent moins utiles voire superflues. Les pièces de rechange requises peuvent être commandées à l'avance et la disponibilité des ressources (personnel, installations, etc.) peut être planifiée à l'avance. Le remplacement de tous les filtres 28 se fait en une seule fois, réduisant ainsi le temps d'arrêt du dispositif de ventilation 20.

En variante, le premier seuil correspond à une durée de vie estimée des filtres 28. Lorsque le véhicule 10 circule dans des conditions variant peu, le dispositif de mesure 34 peut ainsi être omis. Le dispositif 30 de changement des filtres réalise alors le changement des filtres 28 à intervalles de temps réguliers.

## Revendications

1. Dispositif de ventilation (20) pour véhicule (10) de transport, notamment pour véhicule (10) ferroviaire, comportant :
- un dispositif (26) de génération d'un flux d'air ;
- au moins un conduit (36) de circulation d'air destiné à recevoir le flux d'air, le conduit (36) s'étendant selon une direction d'extension (X) entre une entrée d'air (40) et une sortie d'air (42) ; et
- un filtre (28) à air en position de filtration dans laquelle ledit filtre (28) est disposé entre l'entrée d'air (40) et la sortie d'air (42) dans le conduit (36) de circulation d'air;
**caractérisé en ce que** le dispositif de ventilation (20) comporte en outre :
- un compartiment de stockage (38) d'une pluralité de filtres (28) à air, ledit compartiment de stockage (38) étant distinct du conduit (36) de circulation d'air ;
- au moins un filtre (28) à air en position de stockage dans laquelle ledit filtre (28) est disposé dans le compartiment de stockage (38) ; et
- un dispositif (30) de changement des filtres (28) à air configuré pour déplacer chaque filtre (28) entre la position de filtration et la position de stockage dudit filtre (28),
le dispositif de ventilation (20) comportant en outre un dispositif électronique de maintenance (32) configuré pour recevoir un premier signal d'alerte caractéristique d'un taux d'encrassement du filtre (28) en position de filtration, le dispositif électronique de maintenance (32) étant configuré pour envoyer une consigne de remplacement dudit filtre (28) au dispositif (30) de changement des filtres (28) à air lorsque le taux d'encrassement dudit filtre (28) dépasse un premier seuil d'encrassement,
le dispositif électronique de maintenance (32) étant en outre configuré pour envoyer une consigne de maintenance à un récepteur extérieur au dispositif de ventilation (20) lorsque :
- chaque filtre (28) en position de stockage présente un taux d'encrassement supérieur ou égal au premier seuil d'encrassement ; et
- le filtre (28) en position de filtration présente un taux d'encrassement supérieur ou égal à un deuxième seuil d'encrassement, le deuxième seuil d'encrassement étant plus faible que le premier seuil d'encrassement.

2. Dispositif de ventilation (20) selon la revendication 1, comprenant une enceinte (22), le conduit (36) de circulation d'air et le compartiment de stockage (38) étant agencés à l'intérieur de ladite enceinte (22).

3. Dispositif de ventilation (20) selon la revendication 1 ou 2, dans lequel le dispositif (30) de changement des filtres (28) à air comprend :
- un dispositif d'entrainement (60) configuré pour déplacer chaque filtre (28) à air selon une direction (Y) sensiblement perpendiculaire à la direction d'extension (X), entre la position de filtration et la position de stockage dudit filtre (28) ; et
- un dispositif électronique de commande (62) configuré pour commander le dispositif d'entrainement (60).

4. Dispositif de ventilation (20) selon l'une quelconque des revendications 1 à 3, dans lequel le filtre (28) en position de filtration présente une face amont (52) orientée vers l'entrée d'air (40) et une face aval (54) orientée vers la sortie d'air (42), le dispositif de ventilation (20) comportant en outre un dispositif de mesure (34) apte à mesurer une perte de charge (ΔP) entre la face amont (52) et la face aval (54) dudit filtre (28), le taux d'encrassement dudit filtre (28) correspondant à ladite perte de charge (ΔP).

5. Véhicule (10) de transport, notamment véhicule (10) ferroviaire, comprenant un dispositif de ventilation (20) selon l'une quelconque des revendications précédentes.

6. Procédé de maintenance d'un dispositif de ventilation (20) selon l'une quelconque des revendications 1 à 4, comprenant les étapes suivantes :
- fourniture dudit dispositif de ventilation (20), un premier filtre (28) étant en position de filtration et au moins un deuxième filtre (28) étant en position de stockage ;
- remplacement du premier filtre (28) par le deuxième filtre (28), comprenant une première sous-étape de passage du deuxième filtre (28) en position de filtration et une deuxième sous-étape de passage du premier filtre (28) en position de stockage,
le procédé comprenant, préalablement à l'étape de remplacement, une étape d'évaluation du taux d'encrassement du premier filtre (28), le remplacement du premier filtre (28) par le deuxième filtre (28) étant commandé lorsque le taux d'encrassement du premier filtre (28) est supérieur à un premier seuil d'encrassement,
le procédé comprenant en outre une étape de maintenance comprenant l'émission d'une consigne de maintenance à un récepteur extérieur au dispositif de ventilation (20) lorsque :
- chaque filtre (28) en position de stockage présente un taux d'encrassement supérieur ou égal au premier seuil d'encrassement ; et
- le filtre (28) en position de filtration présente un taux d'encrassement supérieur ou égal à un deuxième seuil d'encrassement, le deuxième seuil d'encrassement étant plus faible que le premier seuil d'encrassement.

## Patentansprüche

1. Belüftungsvorrichtung (20) für ein Transportfahrzeug (10), insbesondere für ein Schienenfahrzeug (10), umfassend:
- eine Vorrichtung (26) zum Erzeugen eines Luftstroms;
- mindestens einen Luftzirkulationskanal (36), der dazu bestimmt ist, den Luftstrom aufzunehmen, wobei sich der Kanal (36) entlang einer Erstreckungsrichtung (X) zwischen einem Lufteinlass (40) und einem Luftauslass (42) erstreckt; und
- einen Luftfilter (28) in Filtrationsposition, in der der Filter (28) zwischen dem Lufteinlass (40) und dem Luftauslass (42) in der Luftzirkulationskanal (36) angeordnet ist; **dadurch gekennzeichnet, dass** die Belüftungsvorrichtung (20) ferner Folgendes umfasst:
- ein Aufbewahrungsfach (38) für eine Vielzahl von Luftfiltern (28), wobei sich das Aufbewahrungsfach (38) von dem Luftzirkulationskanal (36) unterscheidet;
- mindestens einen Luftfilter (28) in Aufbewahrungsposition, in der der Filter (28) in dem Aufbewahrungsfach (38) angeordnet ist; und
- eine Vorrichtung (30) zum Wechseln von Luftfiltern (28), die konfiguriert ist, um jeden Filter (28) zwischen der Filtrationsposition und der Lagerposition des Filters (28) zu bewegen,
die Belüftungsvorrichtung (20) ferner umfassend eine elektronische Wartungsvorrichtung (32), die konfiguriert ist, um ein erstes Warnsignal zu empfangen, das charakteristisch für einen Verschmutzungsgrad des Filters (28) in Filtrationsposition ist, wobei die elektronische Wartungsvorrichtung (32) konfiguriert ist, um eine Anweisung zum Auswechseln des Filters (28) an die Vorrichtung (30) zum Auswechseln der Luftfilter (28) zu senden, wenn der Verschmutzungsgrad des Filters (28) einen ersten Verschmutzungsschwellenwert überschreitet,
wobei die elektronische Wartungsvorrichtung (32) ferner konfiguriert ist, um eine Wartungsanweisung an einen Empfänger außerhalb der Lüftungsvorrichtung (20) zu senden, wenn:
- jeder Filter (28) in Aufbewahrungsposition einen Verschmutzungsgrad aufweist, der größer als oder gleich wie der erste Verschmutzungsschwellenwert ist; und
- der Filter (28) in Filtrationsposition einen Verschmutzungsgrad aufweist, der größer als oder gleich wie ein zweiter Verschmutzungsschwellenwert ist, wobei der zweite Verschmutzungsschwellenwert niedriger ist als der erste Verschmutzungsschwellenwert.

2. Belüftungsvorrichtung (20) nach Anspruch 1, umfassend ein Gehäuse (22), wobei der Luftzirkulationskanal (36) und das Aufbewahrungsfach (38) innerhalb des Gehäuses (22) ausgebildet sind.

3. Lüftungsvorrichtung (20) nach Anspruch 1 oder 2, wobei die Vorrichtung (30) zum Wechseln von Luftfiltern (28) Folgendes umfasst:
- eine Antriebsvorrichtung (60), die konfiguriert ist, um jeden Luftfilter (28) in einer Richtung (Y), die im Wesentlichen senkrecht zu der Erstreckungsrichtung (X) ist, zwischen der Filtrationsposition und der Lagerungsposition des Filters (28) zu bewegen; und
- eine Steuerelektronik (62), die konfiguriert ist, um die Antriebsvorrichtung (60) zu steuern.

4. Belüftungsvorrichtung (20) nach einem der Ansprüche 1 bis 3, wobei der Filter (28) in Filtrationsposition eine stromaufwärtige Seite (52), die zu dem Lufteinlass (40) gerichtet ist, und eine stromabwärtige Seite (54), die zu dem Luftauslass (42) gerichtet ist, aufweist, die Belüftungsvorrichtung (20) ferner umfassend eine Messvorrichtung (34), die geeignet ist, einen Druckverlust (ΔP) zwischen der stromaufwärtigen Seite (52) und der stromabwärtigen Seite (54) des Filters (28) zu messen, wobei der Verschmutzungsgrad des Filters {28) dem Druckverlust (ΔP) entspricht.

5. Transportfahrzeug (10), insbesondere Schienenfahrzeug (10), umfassend eine Belüftungsvorrichtung (20) nach einem der vorherigen Ansprüche.

6. Verfahren zur Wartung einer Belüftungsvorrichtung (20) nach einem der Ansprüche 1 bis 4, umfassend die folgenden Schritte:
- Bereitstellen der Belüftungsvorrichtung (20), wobei ein erster Filter (28) in Filtrationsposition ist und mindestens ein zweiter Filter (28) in Aufbewahrungsposition ist;
- Ersetzen des ersten Filters (28) durch den zweiten Filter (28), umfassend einen ersten Teilschritt eines Übergangs des zweiten Filters (28) in Filtrationsposition und einen zweiten Teilschritt eines Übergangs des ersten Filters (28) in Aufbewahrungsposition,
das Verfahren umfassend, vor dem Ersetzungsschritt, einen Bewertungsschritt des Verschmutzungsgrads des ersten Filters (28), wobei das Ersetzen des ersten Filters (28) durch den zweiten Filter (28) gesteuert wird, wenn der Verschmutzungsgrad des ersten Filters (28) größer ist als ein erster Verschmutzungsschwellenwert,
das Verfahren ferner umfassend einen Wartungsschritt, umfassend das Ausgeben einer Wartungsanweisung an einen Empfänger außerhalb der Lüftungsvorrichtung (20), wenn:
- jeder Filter (28) in Aufbewahrungsposition einen Verschmutzungsgrad aufweist, der größer als oder gleich wie der erste Verschmutzungsschwellenwert ist; und
- der Filter (28) in Filtrationsposition einen Verschmutzungsgrad aufweist, der größer als oder gleich wie ein zweiter Verschmutzungsschwellenwert ist, wobei der zweite Verschmutzungsschwellenwert niedriger ist als der erste Verschmutzungsschwellenwert.

## Claims

1. A ventilation device (20) for a transport vehicle (10), in particular for a railway vehicle (10), comprising:
- a device (26) for generating an air flow;
- at least one air circulation duct (36) intended to receive the air flow, the duct (36) extending along a direction of extension (X) between an air inlet (40) and an air outlet (42); and
- an air filter (28) in the filtration position in which said filter (28) is arranged between the air inlet (40) and the air outlet (42) in the air circulation duct (36);
**characterized in that** the ventilation device (20) further comprises:
- a storage compartment (38) for a plurality of air filters (28), said storage compartment (38) being separate from the air circulation duct (36);
- at least one air filter (28) in the storage position in which said filter (28) is arranged in the storage compartment (38); and
- a device (30) for changing air filters (28) configured to move each filter (28) between the filtration position and the storage position of said filter (28),
the ventilation device (20) further comprising an electronic maintenance device (32) configured to receive a first warning signal characteristic of a clogging rate of the filter (28) in the filtration position, the electronic maintenance device (32) being configured to send an instruction to replace said filter (28) to the device (30) for changing air filters (28) when the degree of clogging of said filter (28) exceeds a first clogging threshold,
the electronic maintenance device (32) further being configured to send a maintenance instruction to a receiver external to the ventilation device (20) when:
- each filter (28) in the storage position has a clogging rate greater than or equal to the first clogging threshold; and
- the filter (28) in the filtration position has a clogging rate greater than or equal to a second clogging threshold, the second clogging threshold being lower than the first clogging threshold.

2. The ventilation device (20) according to claim 1, comprising an enclosure (22), the air circulation duct (36) and the storage compartment (38) being arranged inside said enclosure (22).

3. The ventilation device (20) according to claim 1 or 2, wherein the device (30) for changing the air filters (28) comprises:
- a drive device (60) configured to move each air filter (28) in a direction (Y) substantially perpendicular to the extension direction (X), between the filtration position and the storage position of said filter (28); and
- an electronic control device (62) configured to control the drive device (60).

4. The ventilation device (20) according to any one of claims 1 to 3, wherein the filter (28) in the filtration position has an upstream face (52) oriented toward the air inlet (40) and a downstream face (54) oriented toward the air outlet (42), the ventilation device (20) further comprising a measuring device (34) capable of measuring a pressure drop (ΔP) between the upstream face (52) and the downstream face (54) of said filter (28), the degree of clogging of said filter (28) corresponding to said pressure drop (ΔP).

5. A transport vehicle (10), in particular a railway vehicle (10), comprising a ventilation device (20) according to any one of the preceding claims.

6. A method of maintaining a ventilation device (20) according to any one of claims 1 to 4, comprising the following steps:
- supplying said ventilation device (20), a first filter (28) being in the filtration position and at least one second filter (28) being in the storage position;
- replacing the first filter (28) with the second filter (28), comprising a first sub-step of passing the second filter (28) into the filtration position and a second sub-step of passing the first filter (28) into the storage position,
the method comprising, prior to the replacement step, a step of evaluating the clogging rate of the first filter (28), the replacement of the first filter (28) by the second filter (28) being commanded when the clogging rate of the first filter (28) is greater than a first clogging threshold,
the method further comprising a maintenance step comprising the transmission of a maintenance instruction to a receiver external to the ventilation device (20) when:
- each filter (28) in the storage position has a clogging rate greater than or equal to the first clogging threshold; and
- the filter (28) in the filtration position has a clogging rate greater than or equal to a second clogging threshold, the second clogging threshold being lower than the first clogging threshold.
